# EUROPEAN PATENT APPLICATION

(11) **EP 3 179 713 A1**
(43) Date of publication of application: **14.06.2017**
(21) Application number: 16202963.1
(22) Date of filing: 08.12.2016
(51) Int. Cl.: H04N 5/367

(54) **IMPROVED IDENTIFICATION OF FAULTY SENSING ELEMENTS IN SENSING ELEMENT ARRAYS**

(30) Priority: 08.12.2015 GB 201521606
(71) Applicant: Thermoteknix Systems Ltd., Cambridge, Cambridgeshire CB25 9QR (GB)
(72) Inventor: Salisbury, Richard, Cambridge, Cambridgeshire CB2 0QS (GB); Cairnduff, Bruce, Cambridge, Cambridgeshire CB22 5DA (GB)
(74) Representative: Wilson Gunn

(57) **Abstract**

A sensing element array 10 comprises a plurality of sensing elements 11. The sensing elements are connected to a processing unit 12 operable to process the signals output by the sensing elements 11 and a motion sensor 13 operable to determine whether or not the array 10 is in motion and output a signal indicative thereof to the processing unit 12. The processing unit 12 determines whether the motion detected is suitable for identifying faulty sensing elements. If it is determined that the motion detected is suitable, the processing unit 12 implements a faulty sensing element identification algorithm.

## Description

### Technical Field of the Invention

The present invention relates to the identification of faulty sensing elements in sensing element arrays.

### Background to the Invention

Sensing element arrays are commonly the key feature of infrared or visible imaging devices. The sensing element array typically comprises a square or rectangular array of multiple sensing elements, wherein the output of each sensing element may be captured to generate an image. It is not unknown, particularly in infrared imaging arrays, for one or more sensing elements to be faulty. This can be manifested in an output that is full on, full off, steady at an intermediate value or unsteady. Typically, during factory testing and calibration, a number of such faulty sensing elements may be identified. The locations of these faulty sensing elements within the array can then be stored in non-volatile memory. During subsequent operation, the output of these faulty sensing elements can be ignored and there are various known techniques for interpolating the output of adjacent sensing elements to complete an image.

In addition to sensing elements that are inherently faulty, other sensing elements may develop faults over time, perhaps in the wake of a shock experienced by the array. If such sensing elements are identified, their location can be added to the factory calibration map.

Sensing elements that become faulty can be identified by various algorithms, typically involving comparing sensing element outputs to maximum and minimum outputs of adjacent sensing elements. Where the tested sensing element falls outside the normal range of variation of adjacent sensing elements consistently, the tested sensing element can be identified as faulty. In certain circumstances, such as where the array is detecting a steady image with a high local contrast, such algorithms fail. Additionally, algorithms for identifying faulty sensing elements can consume considerable amounts of processing resources. As a result, faulty sensing element identification can be slow or unreliable.

It is therefore an object of the present invention to provide a solution that at least partially overcomes or alleviates the above problem.

### Summary of the Invention

According to a first aspect of the present invention there is provided a sensing element array comprising: a plurality of sensing elements; a motion module operable to determine whether the sensing element array is in motion; and a processing unit operable to implement a faulty sensing element identification algorithm in response to the motion module output and the sensing element outputs.

The motion moduleprovides a simple indication as to whether the image is steady or moving. Accordingly, simplified faulty sensing element identification algorithms can be used to identify faulty sensing elements when the image is moving. This reduces the amount of processing resources required to identify faulty sensing elements. For a given processing capacity, this can therefore provide more reliable results more rapidly.

The sensing element array may be operable to sense incident electromagnetic radiation. The sensing element array may preferably be operable to sense ultraviolet, visible or, most preferably, infrared radiation.

The motion module may comprise a software algorithm. The software algorithm may be operable to determine whether the sensing array is in motion by determining whether at least two adjacent sensing elements in the array are exhibiting variation in output.

Alternatively, the motion module may comprise a motion sensor. The motion sensor may comprise a compass, gyroscope, inclinometer, position sensor or the like. Preferably, the motion sensor is an accelerometer. Suitable forms of accelerometer include, but are not limited to: capacitive, piezoelectric, servo force balance, laser, magnetic, optical, strain gauge, surface acoustic wave, micro-electromechanical or the like. Most preferably, the motion sensor is a digital electronic accelerometer.

The sensing element array may be provided with a memory unit. The memory unit may be a non-volatile memory unit. The memory unit may be operable to store the location of faulty sensing elements identified during factory calibration. In some embodiments, the memory unit may additionally be operable to store the location of additional faulty sensing elements identified using the faulty sensing element identification algorithm.

The processing unit may be operable to implement the faulty sensing element identification algorithm continuously. Alternatively, the faulty sensing element identification algorithm may be implemented in response to the output of the motion module indicating motion. In a preferred embodiment, a first faulty sensing element identification algorithm may be selected in response to the output of the motion module indicating motion, and a second faulty sensing element identification algorithm selected in response to the output indicating no motion.

The processing unit may be operable to implement the faulty sensing element identification algorithm when the motion detected by the motion sensing element exceeds a first threshold. The processing unit may be operable to cease implementation of the faulty sensing element identification algorithm when the motion detected by the motion sensing element exceeds a second threshold. This can ensure that the algorithms are only implemented when the range of motion is suitable for identifying faulty sensing elements.

The faulty sensing element identification algorithm may comprise the steps of: selecting a test sensing element; selecting a plurality of sensing elements local to the test sensing element; and determining whether the test sensing element falls outside the normal range of variation of adjacent sensing elements consistently. In a preferred embodiment, the local sensing elements may form an n by n block or an n by m block. Typically, n or m may be 2, 3 or 4. Preferably, the test sensing element may be located at a corner of the block.

The processing unit may be operable to output details of the locations of faulty sensing elements to other devices. The processing unit may be operable to automatically compensate for the output of faulty sensing elements. The compensation may comprise replacing the output of a faulty sensing element with an output based upon the output of one or more local, non-faulty, sensing elements.

According to a second aspect of the present invention there is provided a method of identifying faulty sensing elements in a sensing element array provided with a motion module, the method comprising the steps of: determining whether the array is in motion by use of the motion module; and implementing a faulty sensing element identification algorithm in response to the motion module output and the sensing elements outputs.

The method of the second aspect of the present invention may incorporate any features of the first aspect of the invention as required or as desired.

According to a third aspect of the present invention there is provided a sensing element array comprising: a plurality of sensing elements; a motion sensor operable to determine whether the sensing element array is in motion and output a signal indicative thereof; and a processing unit operable in response to the motion sensor to implement a faulty sensing element identification algorithm only when the sensing element array is in motion.

The sensing element array of the third aspect of the present invention may incorporate any features of the first and second aspects of the invention as required or as desired.

According to a fourth aspect of the present invention there is provided a method of identifying faulty sensing elements in a sensing element array provided with a motion sensor, the method comprising the steps of: determining whether the array is in motion by use of the motion sensor; and implementing a faulty sensing element identification algorithm only when the sensing element array is in motion.

The method of the fourth aspect of the present invention may incorporate any features of the first, second and third aspects of the invention as required or as desired.

According to a fifth aspect of the present invention, there is provided an imaging device comprising a sensing element array according to either the first or the third aspect of the present invention.

According to a sixth aspect of the present invention, there is provided an imaging device comprising a sensing element array operable according to the method of either the second or the fourth aspect of the present invention.

The imaging devices of the fifth and sixth aspects of the present invention may incorporate any features of the first, second, third and fourth aspects of the invention as required or as desired.

The imaging device may comprise a display screen. Additionally or alternatively, the imaging device may comprise a communication unit operable to output signals indicative of the captured images. The communication unit may be operable to output signals via a wireless data connection and/or via a socket adapted to receive a data cable. The imaging device may comprise one or more user actuable inputs.

### Detailed Description of the Invention

In order that the invention may be more clearly understood an embodiment thereof will now be described, by way of example only, with reference to the accompanying drawings, of which:
- Figure 1: is a schematic block diagram illustrating a sensing element array according to the present invention; and
- Figure 2: is a schematic block diagram illustrating an imaging device incorporating a sensing element array according to the present invention.

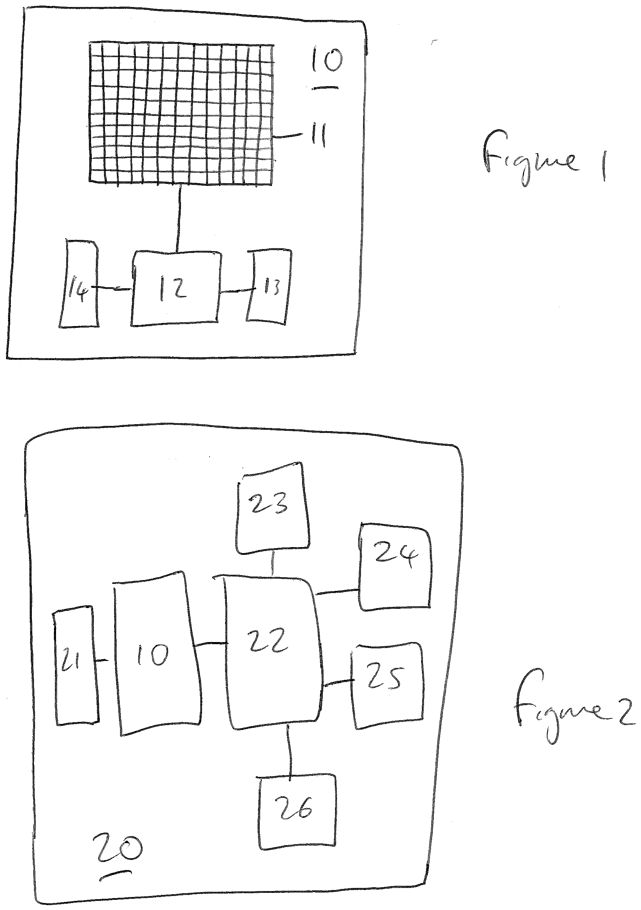

Turning now to figure 1, a sensing element array 10 according to the present invention comprises a plurality of sensing elements 11. Typically, the sensing elements 11 might be infrared sensing elements operable to provide an output indicative of the intensity of infrared radiation incident upon each sensing element 11. Nevertheless, the skilled man will appreciate that the present invention may also be applied to visible and ultraviolet sensing arrays.

The sensing elements are connected to a processing unit 12 operable to process the signals output by the sensing elements 11. The array 10 is also provided with a motion sensor 13, typically an accelerometer. The motion sensor 13 is operable to determine whether or not the array 10 is in motion and output a signal indicative thereof to the processing unit 12.

Upon receipt of the signal from the motion sensor 13, the processing unit 12 determines whether the motion detected is suitable for identifying faulty sensing elements. If it is determined that the motion detected is suitable, the processing unit 12 implements a faulty sensing element identification algorithm. Alternatively, if the processing unit 12 is already running a faulty sensing element identification algorithm, the processing unit 12 either alters the faulty sensing element identification algorithm to identify faulty sensing elements based on the motion of the array 10 or implements an alternate faulty sensing element identification algorithm which does so. The algorithm can be altered and/or implemented to test each sensing element 11 in turn and identify whether any sensing elements 11 have become faulty.

Typically, the array 10 is provided with a non-volatile memory unit 14 in which can be stored the location of faulty sensing elements identified during factory calibration. These sensing elements 11 can be omitted from the identification algorithm. If any further sensing elements 11 are identified as faulty, the memory unit 14 may be operable to store the location of these sensing elements.

Turning now to figure 2, an illustrative diagram of an imaging device 20 incorporating an array 10 is shown. The imaging device 20 may comprise a lensing and/or filtering array 21 operable to direct radiation to be imaged on to the sensing array 10.

The imaging device 20 is provided with a device control unit 22. The device control unit 22 is operable to control the operation of all the components of the imaging device 22 and to perform any necessary processing of the signals output by array 10 in order to generate an image for output. In particular, the control unit 22 may be operable in response to the faulty sensing element locations stored in memory unit 22 to replace the output of faulty sensing elements with an output related to the output of local non-faulty sensing elements 11. In particular the output of faulty sensing elements may be replaced by an interpolation of the output of adjacent sensing elements 11 to complete an image.

As shown in figure 2, the imaging device 20 also comprises user actuable inputs 23, a display 24, a data output socket 25 and a wireless communication unit 26. The user actuable inputs 23 provide for user control of the operation of the imaging device. The display 24 provides an output of images captured by the device 20 and a means for providing a user with information upon the operation of the device 20. The data output socket 25 and wireless communication unit 26 provide for export of captured images from the device 20 and/or for download of additional data and/or software updates. The device 20 may also be provided with a device memory unit 26, typically operable to store images captured by the device 20.

The above embodiment is described by way of example only. Many variations are possible without departing from the scope of the invention as defined in the appended claims.

## Claims

1. A sensing element array comprising: a plurality of sensing elements; a motion module operable to determine whether the sensing element array is in motion; and a processing unit operable to implement a faulty sensing element identification algorithm in response to the motion module output and sensing elements outputs.

2. A sensing element array as claimed in claim 1 wherein the sensing element array is operable to sense incident electromagnetic radiation.

3. A sensing element as claimed in either claim 1 or claim 2 wherein the motion module comprises a software algorithm.

4. A sensing element as claimed in either claim 1 or claim 2 wherein the motion module comprises a motion sensor.

5. A sensing element array as claimed in any preceding claim wherein the processing unit is operable to implement the faulty sensing element identification algorithm when the motion detected by the motion module exceeds a first threshold.

6. A sensing element array as claimed in any preceding claim wherein the processing unit is operable to cease implementation of the faulty sensing element identification algorithm when the motion detected by the motion module exceeds a second threshold.

7. A sensing element array as claimed in any preceding claim wherein the faulty sensing element identification algorithm comprises the steps of: selecting a test sensing element; selecting a plurality of sensing elements local to the test sensing element; and determining whether the test sensing element falls outside the normal range of variation of adjacent sensing elements consistently.

8. A sensing element array as claimed in claim 7 wherein the local sensing elements form an n by n block or an n by m block and the test sensing element is located at a corner of the block.

9. A method of identifying faulty sensing elements in a sensing element array provided with a motion module, the method comprising the steps of:
determining whether the array is in motion by use of the motion module; and
implementing a faulty sensing element identification algorithm in response to the motion module output and sensing elements outputs.

10. A method as claimed in claim 9 wherein the method includes the step of:
implementing the faulty sensing element identification algorithm when the motion detected by the motion module exceeds a first threshold.

11. A method as claimed in either claim 9 or claim 10 wherein the method includes the step of: implementing the faulty sensing element identification algorithm when the motion detected by the motion module exceeds a second threshold.

12. A method as claimed in any one of claims 8 to 10 wherein the faulty sensing element identification algorithm comprises the steps of: selecting a test sensing element; selecting a plurality of sensing elements local to the test sensing element; and determining whether the test sensing element falls outside the normal range of variation of adjacent sensing elements consistently

13. A method as claimed in claim 12 wherein the local sensing elements form an n by n block and the test sensing element is located at a corner of the block.

14. An imaging device comprising a sensing element array according to any one of claims 1 to 8.

15. An imaging device operable according to the method of any one of claims 9 to 13.
